(19) Europäisches Patentamt
European Patent Office
Office européen des brevets

(11) Publication number: 0 031 210
B1

(12) # EUROPEAN PATENT SPECIFICATION

(45) Date of publication of patent specification: **04.04.84**

(51) Int. Cl.$^3$: **H 04 M 1/21**

(21) Application number: **80304385.0**

(22) Date of filing: **04.12.80**

(54) **Telephone attachment.**

(30) Priority: **06.12.79 US 97142**

(43) Date of publication of application:
**01.07.81 Bulletin 81/26**

(45) Publication of the grant of the patent:
**04.04.84 Bulletin 84/14**

(84) Designated Contracting States:
**AT BE CH DE FR GB IT LI LU NL SE**

(56) References cited:
**US - A - 2 731 764**
**US - A - 3 469 336**

(73) Proprietor: **Foreman, Thomas Vernon, Sr.**
**16630 Imperial Valley Drive Suite 206**
**Houston Texas 77060 (US)**

(72) Inventor: **Foreman, Thomas Vernon, Sr.**
**16630 Imperial Valley Drive Suite 206**
**Houston Texas 77060 (US)**

(74) Representative: **Thiemann, Peter Albert William et al,**
**LLOYD WISE, TREGEAR & CO. Norman House**
**105-109 Strand**
**London WC2R 0AE (GB)**

**EP 0 031 210 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Telephone attachment

This invention relates to attachments for telephones generally, and in particular to attachments for telephones having a lifting cavity to receive the fingers of the lifting hand with an anti-slip ridge across the upper wall of the cavity, such as a standard desk telephone.

It is desirable to provide an attachment for a telephone that will support a book or the like so that it can be readily reached or observed by the user of the telephone. It is also desirable to provide such an attachment that can be attached to the telephone without altering or physically damaging the telephone. Also, preferably, such an attachment should be capable of being attached in position to perform its function on the telephone without interfering in any way with the use of the telephone and which relies solely on the configuration of the telephone to provide the means of attaching the attachment to the telephone. Also, preferably such an attachment should be one that can be easily removed from the telephone, when this is desired.

Prior efforts to devise such a telephone attachment are disclosed in U.S. Patents 3,469,336 (Halperin) and 2,731,764 (Zeller).

Halperin shows an attachment for a standard telephone of the kind set forth in the opening paragraph, which has an easel-like member for supporting a calendar, notes or the like above the telephone, and a hook member of resilient material secured at one end and having the other free end formed as a hook for extending into the lifting cavity of the telephone to engage the inner side of the anti-slip ridge in the upper wall of the cavity.

In Halperin the hook-member coacts with a plate-like member secured at one side to extend generally parallel to but above the hook member so that the two provide a clip. The hook member is engaged in the cavity while the plate member engages the upper surface of the telephone between the receiver cradles, which surface overlies the cavity. In Halperin, there are in fact two hook members of relatively small width located on each side of the plate member so that the latter does not actually overlie the hook members.

The Halperin attachment is push fitted onto the telephone by having the hook member configured to cam over the anti-slip ridge to engage the clip, the hook member being held in place by the force of its resilient deflection relative to the plate. The attachment is equally readily removed. The weight of the attachment and of anything placed on the easel is solely taken by the clip. Any excess weight or accidental application of presure to the easel may well cause the clip to release, the more so since the clip is stated to be readily detachable.

An attachment such as described in Halperin, apart from its likely mechanical instability, could not be readily used in places such as hotels or motels where it would be readily the subject of theft.

Zeller discloses an earlier form of attachment having a clip based on an ordinary stationary type U-shaped clip that is attached to the telephone in the same manner as that of Halperin. Zeller does show (Figures 2 and 3) the use of a release arm of the clip to abut the rear surface of the telephone and position the attachment. However, it is a single point abutment giving little lateral stability and the point of the abutment on the rear surface away from the immediate vicinity of the lifting cavity is such that no substantial force can be resisted. In addition, the force generated at the abutment point by any weight or pressure on the easel is such as to act to open the clip and release it from the telephone. Thus it is not considered to be mechanically satisfactory. In addition, Zeller's attachment is readily removed making it liable to theft.

There will be described hereinafter embodiments of a telephone attachment according to the present invention in which an improved mechanical stability is provided. Furthermore, these embodiments are provided with means to resist the unauthorized removal of the attachment from the telephone.

In the discussion that follows of the invention and preferred features of it, and in the claims of this specification, it will be understood that references to the position and orientation of the attachment and to cooperating parts of the telephone are to be understood as being when the attachment is attached to the telephone in its normal position.

According to the present invention there is provided an attachment for a telephone such as a standard desk telephone having a lifting cavity below cradles to receive the fingers of the lifting hand with an anti-slip ridge across the upper wall of the cavity, which attachment includes an easel-like member for supporting a book or the like above the telephone, and a hook member of resilient material secured at one end and having the other end free formed as a hook for extending into the cavity to engage the inner side of the anti-slip ridge in the upper wall of the lifting cavity of a telephone, characterised in that the attachment further comprises two spaced, parallel base members located on opposite sides of the hook member and extending below the hook member to engage the surface of the telephone in the vicinity of the lower side of the cavity whereby the weight of the easel-like member is substantially transferred to the body of the telephone and the easel-like member is thereby held in the desired position above the telephone.

Mechanical rigidity and stability is improved by the weight of the easel-like member and any force applied thereto be taken through the base members and stability is further improved by the two base members providing spaced apart support points on the body of the telephone.

More particularly in the preferred embodiments each of the base members is generally L-shaped having a base leg or foot portion that engages the aforementioned surface of the telephone in the vicinity of the lower side of the cavity, and an upright portion, which may make an obtuse angle with the foot portion to provide a convenient backward inclination of the easel. Each foot portion preferably extends from a position outside the lifting cavity to terminate within the cavity and the lower surface may be contoured to match the adjacent telephone surface.

Additionally the hook member may be L-shaped having an upwardly extending leg that terminates in the aforementioned secured end of the hook member. The hook member has a generally horizontal leg having the hook at its free end for extending into the cavity to engage the anti-slip ridge. Preferably the hook member extends virtually the width of the cavity between the foot portions that are located adjacent the side walls of the cavity in the preferred construction. The upward leg of the hook member is preferably provided with an opening through which a rod may be inserted to move the hook out of engagement with the ridge to allow the attachment to be removed from a telephone. This last-mentioned feature is particularly valuable when additional measures are taken to prevent unauthorised removal of the attachment.

To this end in the preferred embodiments, the attachment is provided with an anti-theft plate secured at one side and extending forwardly to lie above the hook member and overlie the surface of the telephone between the receiver cradles so as to prevent access to the hook member from above. The base members, and specifically the foot portions discussed above, extend upwardly from the hook member to the anti-theft plate to prevent access to the hook member from each side. Consequently the abovementioned opening in the hook member then provides the relatively secure access.

In one embodiment to be described the easel-like member is permanently secured to L-shaped base members. In a second embodiment, the easel-like member is a unitary structure with the hook member and the anti-theft plate and is provided with means for receiving and locating the L-shaped base members together with cooperating means of the anti-theft plate and the foot portions of the base members and of the easel-like member and the upright portions of the base members that interlock to secure the whole structure.

The invention and its practice will now be further described with reference to the two embodiments outlined above and illustrated in the accompanying drawings:

In the Drawings:

Fig. 1 is a sectional view of one preferred embodiment of the attachment of this invention showing the attachment installed on a standard desk-type telephone, which is shown in phantom lines.

Fig. 2 is a top view of the attachment of Fig. 1.

Fig. 3 is a rear view of the attachment of Fig. 1 with the telephone omitted.

Fig. 4 is a partial front view of the attachment showing only lower portion.

Fig. 5 is a bottom view of the portion shown in Fig. 4.

Fig. 6 is an exploded side view of an alternate embodiment of the invention in which the attachment support members can be quickly and easily attached to and removed from the main body of the attachment to facilitate adapting the attachment for telephones of different manufacture or which have different dimensions.

Fig. 7 is a side view of one of the support members of this embodiment of the invention.

Fig. 8 is an isometric view on an enlarged scale of the upper end of the support member of Fig. 6.

Fig. 9 is a vertical sectional view of the lower portion of the attachment of Fig. 6 with a portion of the telephone to which it is attached shown in phantom lines.

Fig. 10 is a view taken along line 10—10 of Fig. 9.

Fig. 11 is an isometric view, on an enlarged scale, of the lower portion of one of the support members of this embodiment.

As explained above, the attachment of this invention is designed for use with a telephone having a lifting cavity to receive the fingers of the lifting hand with a anti-slip ridge extending across the upper wall of the cavity. One type of telephone having such a cavity is the standard desk telephone, such as the one shown in phantom lines in Figs. 1 and 2 and indicated by the number 10. The hand-held portion of the telephone, usually referred to as the receiver, is not shown in these drawings. It is, of course, supported by spaced cradles 11 and 12 in the well-known manner, when it is not in use. Located in the telephone housing below the cradle portion of the telephone is cavity 14, which is provided to facilitate the moving of the telephone from place to place. As is well known, by inserting the fingers of one hand into the cavity with the thumb somewhere along the upper surface of the telephone, the telephone can be easily moved from one place to another. To help secure the hold of the fingers on the telephone, a ridge is located adjacent the upper edge of the cavity and extends transversely of the cavity. The ridge allows a better grip to be maintained on the telephone. This ridge in the drawings is indicated by the number 16.

Attachment 20 includes easel-like section or member 22 having two panels 23 and 24 integrally connected at an angle to provide a support for a book or the like. In the embodiment shown, groove 26 is located in between the book supporting panels to accommodate the rings of a spiral or ring-bound book (not shown). Hooks 27 are located at opposite ends of the groove to engage the outside spirals or rings of this type of book to hold the book in position on easel 22. Preferably, of course, the easel section extends upwardly and rearwardly of the telephone to position the book for easy reading and easy access by the user of the telephone. This preferred position relative to the telephone is shown in Fig. 1.

Means are provided for supporting the easel-like member in this desired position above the telephone. In the embodiment shown, the means includes two L-shaped support members 30 and 32 which are in spaced parallel position. These supporting members include upwardly extending leg portions 30a and 32a and base leg or foot portions 30b and 32b that are at an obtuse angle to provide a backward inclination to the easel 32.

In the embodiment shown, upwardly extending leg portions 30a and 32a of the support members are connected to the easel section by positioning these portions in elongate grooves provided in parallel mounting flanges 34 and 36 attached to the back of the easel section, as shown in Fig. 3. This arrangement allows the easel section of the attachment and the yet to be described attaching means to be molded in one pice and the supporting means to be molded in another piece and then the two connected together as explained above. The L-shaped supporting members after being positioned in the grooves of the mounting flanges are attached to the flanges with an adhesive or, if made of thermoplastic material, by fusing the two together with heat.

As best seen in Fig. 1, the lower edges of the foot portions of the two L-shaped support members are contoured to match the contour of the telephone as it slopes downwardly from the lower surface of the finger cavity toward the back of the telephone. As explained above, preferably when the contours mate, the easel section of the attachment is positioned at the proper angle above the telephone. In the embodiment shown, the foot portions 30b and 32b of the support members extend from a position outside the cavity 14 to have their forward ends terminate in the cavity, and they are positioned adjacent the respective side walls of the cavity.

Means are provided for engaging the inner side of the ridge across the upper wall of the lifting cavity of a telephone to hold the supporting means in position in engagement with the telephone to support the easel-like member in the desired position. In the embodiment shown, L-shaped hook member 40 is located between the two spaced parallel base portions of the support members. The L-shaped member has one leg 40a extending upwardly at an angle. The leg is connected at its upper end to the lower edge of the easel-like member of the attachment. Other leg 40b extends into the finger cavity and is provided at its free end with a hook 40c to engage the inner surface of transverse ridge 16, as shown in Fig. 1. Preferably, the material from which the attachment is made has sufficient resiliency for the L-shaped member to bend downwardly far enough to allow the hook to pass under the transverse ridge without damage to the member and then, due to its resiliency, snap upwardly into position into latching engagement with the inner side of the ridge. It also is preferable that the hook member be somewhat bent out of its relaxed position when in engagement with the ridge so that it will continue to exert an upward force urging the hook to maintain its position in engagement with the upper surface of the cavity and the inner edge of the ridge.

It is contemplated that this attachment will be used extensively in hotel and motel rooms. Using the attachment, a multi-page booklet can be positioned above the telephone providing at a convenient location hotel information and also advertisements of the facilities in the hotel and motel and adjacent thereto, such as cafe's, beauty parlors, and the like. Consequently, it is desirable that the attachment not be easily removed from the telephone by the guests. In accordance with this invention, removal is at least discouraged by positioning an anti-theft plate 46 to cover the L-shaped hook member from above to prevent someone from simply pushing down on the L-shaped member and removing the attachment. As shown in Fig. 1, anti-theft plate 46 has one side attached to the lower edge of the easel section of the attachment and extends across the top of the telephone between receiver cradle portions 11 and 12. Plate 46 should be wide enough to completely cover the L-shaped hook member 40 and also fill the space between the two cradles to prevent someone from reaching the L-shaped hook member from above. Preferably, the anti-theft plate 46 is forced slightly upwardly by the telephone when the attachment is installed on the telephone to insure that the plate is in firm engagement with the surface of the telephone between the two cradles. This allows the plate to serve a secondary function as a dust cap to protect the cavity formed by the L-shaped hook member from being a collecting place for dust and other debris.

Combining with the anti-theft plate 46 to limit easy access to the hook member, are foot portions 30b and 32b of the supporting members. As shown in Fig. 1, the base portions extend from the surface of the telephone in the vicinity of the lower surface of cavity 14 upwardly past the hook member 40 to the lower surface of the anti-theft plate 46. The width of the base members are reduced at the forward end so they can extend a substantial distance in the cavity. This also provides lateral stability to the attachment. Thus, the hook member cannot be reached from the top or the side.

To protect the attachment from attack from the rear, the distance from the back of the attachment to the forward end of the hook member is beyond the reach of finger.

It may be necessary or desirable from time to time to remove the attachment from the telephone. To do so, as explained, above, it is only necessary to move the hook portion of L-shaped member 40 downwardly out of engagement with the ridge. In the embodiment shown, a hole 50 is located in upwardly extending leg 40a of the L-shaped hook member through which a thin stiff rod, such as rod 52, shown in phantom lines in Fig. 1, can extend into engagement with the outer end of the hook portion of L-shaped member 40. The rod can then be used as a lever with the wall of the hole in the leg as a fulcrum to pry hook 40c downwardly out of engagement with ridge 16 to allow the attachment to be easily removed from the telephone. By making the hole small enough that a special thin but stiff rod is required to remove the attachment, a rod which would not readily be found in a hotel room or carried by a quest, the likelihood of the attachment being stolen is greatly reduced.

In Figures 6 through 11, an alternate embodiment of the invention is shown. This embodiment differs from the embodiment in Figs. 1 to 5 in two ways. First, the arrangement for attaching the L-shaped support members to the easel section is modified so that these members are not permanently attached to the easel section but can be removed and replaced quickly and easily. Also, the attaching arrangement for the support member connects the anti-theft plate to the support members so that it cannot be pried upwardly away from the upper surface of the telephone between the cradle. Secondly, the fulcrum around which the hook member pivots is moved closer to the hook end of the hook member to increase the resilient force exerted by the hook member against the upper surface of the cavity of the telephone. These two structural changes provide more structural rigidity to the easel when attached to the telephone and make it much more difficult for the easel to be removed from the telephone by someone not having the proper tools.

In the modified arrangement for attaching the L-shaped support members, a circular rod 61 extends transversely across the lower surface of anti-theft plate 60 and is attached thereto. L-shaped supporting members 62 and 63 are provided with grooves 64 and 65, respectively, in the upper edges of their lower legs 62b and 63b. These grooves are designed to receive the ends of rod 61 to securely connect legs 62b and 63b of the supporting members to anti-theft plate 60. Upwardly extending legs 62a and 63a of support member 62 and 63 are provided with transversely extending pins 66 and 67 respectively. These pins, as best seen in Fig. 8, extend outwardly from both sides of the upper end of the support members and are positioned to be received in grooves or slots 68 (only one of which shown) in the upper ends of each pair of parallel mounting flanges 70a and 70b and 71a and 71b.

To attach supporting member 62 to the easel section of the attachment, pin 66 is positioned in groove 68 and the upper leg portion of the support member is located in the groove provided by parallel mounting flanges 70a and 70b. At the same time that the supporting member is rotated into position between the mounting flanges, lower leg 62b is bent outwardly far enough to position groove 64 to receive the outer end of pin 61 as leg 61b moves inwardly to its unstressed position. With the pin located in groove 64 and pin 66 located in groove 68, the support member is firmly attached to the easel section of the attachment.

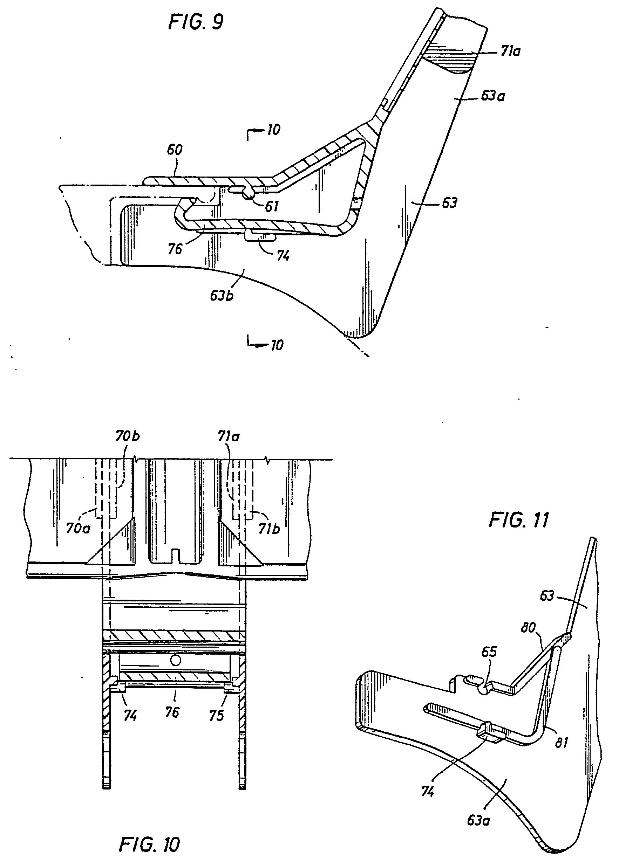

In the same manner, supporting member 63 is attached to the opposite side of pin 61, as shown in Fig. 9. When so assembled and in position in the lifting cavity of the telephone, as shown in Fig. 9, upward movement of anti-theft plate 60 is resisted by pin 61 which is held against upward movement by the lower portions of the support members located in the cavity. Further, the support members cannot be removed from the easel section, while the attachment is attached to a telephone, because the sides of the finger cavity will prevent the lower legs of the supports from being moved laterally far enough to clear the end of pin 61.

As explained above, one of the important features of this attachment is that the support members used are molded separately from the main body or easel section of the attachment. This is advantageous because the lifting cavity in telephones made by different manufacturers vary somewhat in shape and size. Therefore, it is necessary to provide different supporting members for each make of telephone. In the first embodiment, where the support members were permanently attached to the easel section, after the support members had been assembled the attachment would be useful only with one make of telephone. In this embodiment, should it be desired to move the attachment from one make of telephone to another, the supporting members can be quickly and easily removed and replaced by supporting members that are designed to fit the particular telephone in question. Also, by eliminating the step of fusing or gluing the support members to the easel section, a considerable amount of assembly time is eliminated.

As explained above, in this embodiment, the fulcrum point around which the latch or hook member pivots is moved closer to the end of the latch member to increase the resilient force the latch member exerts upwardly against the upper surface of the cavity of the telephone. As shown in Fig. 11, L-shaped pivot member 74 is attached to the inside surface of leg portion 63a of support member 63. A similar L-shaped pivot member 75 is positioned on the inside surface of leg portion 62b of leg 62, as shown in Fig. 6. The short leg of these L-shaped pivot members has a rounded upper surface positioned to engage the lower surface of latch member 76, as shown in Fig. 9. This arrangement greatly increases the stiffness of latch member 76, which improves its ability to hold the attachment in position on the telephone.

To improve the ability of the support members to resist the loads imposed on the support members by pin 61 and pivot members 74 and 75, sections 80 and 81 of increased thickness are provided on leg 63. Similar thicker sections are also provided on leg 62 for the same purpose.

## Claims

1. An attachment for a telephone (10) such as a standard desk telephone having a lifting cavity (14) below cradles (11, 12) to receive the fingers of the lifting hand with an anti-slip ridge (16) across the upper wall of the cavity, which attachment includes an easel-like member (22) for supporting a book or the like above the telephone, and a hook member (40) of resilient material secured at one end and having the other end free formed as a hook (40*c*) for extending into the cavity to engage the inner side of the anti-slip ridge (16) in the upper wall of the lifting cavity (14) of a telephone, characterised in that the attachment further comprises two spaced, parallel base members (30, 32: 62, 63) located on opposite sides of the hook member (40) and extending below the hook member (40) to engage the surface of the telephone in the vicinity of the lower side of the cavity whereby the weight of the easel-like member (22) is substantially transferred to the body of the telephone and the easel-like member is thereby held in the desired position above the telephone.

2. The attachment of Claim 1 characterised by the base members (30, 32) having portions (30*b*, 32*b*) that extend into the lifting cavity (14).

3. The attachment of Claim 1 characterised by each of the base members (30, 32: 62, 63) being generally L-shaped having a foot portion (30*b*, 32*b*, 62*b* or 63*b*) whose lower surface engages said surface of the telephone (10) in the vicinity of the lower side of the cavity (14), and an upright portion (30*a*, 30*b*, 62*a* or 62*b*) making an obtuse angle with the foot portion (30*a*, 30*b*, 62*a*, 63*b* respectively) so as to incline backwardly from the telephone (10) when positioned thereon.

4. The attachment of Claim 3 in which each foot portion (30*b*, 32*b* 62*b* or 63*b*) extends from a position outward of the cavity (14) to terminate within the cavity (14).

5. The attachment of Claim 1, 2, 3 or 4, in which the hook member is L-shaped having an upwardly extending leg (40*a*) terminating in said one secured end and a generally horizontal leg (40*b*) having said hook (40*c*) at said free end for extending into the cavity (14) to engage the anti-slip ridge (16), and characterised by said upwardly extending hook member leg (40*a*) having an opening (50) through which a rod (52) is receivable to move the hook (40*c*) downwardly out of engagement with the ridge (16) to allow the attachment to be removed from a telephone (10).

6. The attachment of any one of the preceding claims further characterised by an anti-theft plate (46, 60) secured at one side and extending forwardly to lie above the hook member (40) and overlie the surface of the telephone between the cradles (11, 12) so as to prevent access to the hook member (40) from above; and further characterised by said base members (30, 32: 60, 62) having portions extending upwardly from the hook member (40) to the anti-theft plate (46) to prevent access to the hook member (40) from each side.

7. The attachment of any one of the preceding claims in which the resilient hook member (40) is deflected downwardly when positioned in the cavity with the hook (40*c*) in engagement with the inside edge of the ridge (16) whereby the hook member (40) exerts an upward force on the upper side of the cavity.

8. The attachment of Claim 1 characterised by each of the base members (62, 63) being generally L-shaped having a foot portions (62*b*, 63*b*) which extends into said cavity (14) and whose lower surface engages said surface of the telephone (10) in the vicinity of the lower side of the cavity (14), and an upright portion (62*a*, 63*b*) which extends along the rear side of the easel-like member 22; and further characterised by an anti-theft plate (60) secured at one side and extending forwardly to lie above the hook member (40) and overlie the surface of the telephone betweeen the cradles (11, 12) so as to prevent access to the hook member (40) from above; and cooperating means (61 and 64, 65) disposed on the anti-theft plate (60) and said foot portions (62*b*, 63*b*) to secure the anti-theft plate (60) to the foot porttions, which cooperating means are not releasable when the attachment is in position on the telephone (10).

9. The attachment of Claim 8 in which the hook-member is generally L-shaped having an upwardly extending leg (40*a*) terminating in said one secured end and a generally horizontal leg (40*b*) having said hook (40*c*) on said free end for extending into the cavity (14) to engage the anti-slip ridge (16), and characterised by said upwardly extending hook member leg (40*a*) having an opening (50) through which a rod (52) is receivable to move said hook (40*c*) downwardly out of engagement with the ridge (16) to allow the attachment to be removed from a telephone (10).

10. The attachment of Claim 8 or 9 characterised by said easel-like member having on the rear side thereof two spaced pairs of parallel spaced mounting flanges (70*a*, 70*b* and 71*a*, 71*b*) the flanges of each pair having a respective one of said upright base member portions (62a, 63a) received therebetween and characterised by further cooperating means (66, 67) of the easel-like member (22) and the upright base member portions (62*a*, 63*a*) by which said easel-like member (22) is attached to the base members (62, 63).

11. The attachment of Claim 10 in which said further cooperating means (66, 67) are not releasable without release of the first-mentioned cooperating means (61 and 64, 65).

12. The attachment of Claim 10 or 11 characterised by said easel-like member (22) being a unitary structure with said hook member (76) and said anti-theft plate (60).

13. The attachment of Claim 10 characterised by said easel-like member (22) being a unitary structure with said hook member (76) and said anti-theft plate (60) and said further cooperating means (66, 67) comprises pin and slot arrangements which are not releasable without release of the first-mentioned cooperating means.

**Revendications**

1. Accessoire pour appareil téléphonique (10) tel qu'un téléphone standard de bureau possédant une cavité de soulèvement (14) sous les berceaux (11, 12) pour recevoir les doigts de la main qui soulève le téléphone, avec une nervure anti-glissement (16) transversalement à la paroi supérieure de la cavité, accessoire qui comporte une pièce du genre chevalet (22) pour supporter un livre ou autre semblable au-dessus du téléphone, et un crochet (40) en matériau élastique fixé à une extrémité et ayant l'autre extrémité libre, en forme de crochet (40c) pour s'étendre dans la cavité pour venir au contact de la face interne de la nervure anti-glissement (16) de la paroi supérieure de la cavité de soulèvement (14) d'un téléphone, caractérisé en ce que l'accessoire comporte de plus deux pièces de base parallèles l'une à l'autre et à une certaine distance l'une de l'autre (30, 32, 62, 63) situées sur les côtés opposés du crochet (40) et s'étendant sous le crochet (40) pour venir au contact de la surface du téléphone au voisinage de la face inférieure de la cavité, ce par quoi le poids de la pièce du genre chevalet (22) est essentiellement transféré au corps du téléphone et la pièce du genre chevalet est maintenue dans la position désirée au-dessus du téléphone.

2. Accessoire selon la revendication 1, caractérisé en ce que les pièces de base (30, 32) comportent des portions (30b, 32b) qui s'étendent dans la cavité de soulèvement (14).

3. Accessoire selon la revendication 1, caractérisé en ce que chacune des pièces de base (30, 32: 62, 63), ayant de façon générale la forme d'un L, présente une portion de pied (30b, 32b, 62b ou 63b) dont la surface inférieure vient au contact de ladite surface du téléphone (10) au voisinage de la face inférieure de la cavité (14) et une portion montante (30a, 30b, 62a ou 62b) qui forme un angle obtus avec la portion de pied (30a, 30b, 62a, 63b respectivement) de façon à s'incliner vers l'arrière à partir du téléphone (10) lorsqu'on l'y place.

4. Accessoire selon la revendication 3, dans lequel chaque portion de pied (30b, 32b, 62b ou 63b) s'étend à partir d'une position extérieure de la cavité (14) pour se terminer dans cette cavité (14).

5. Accessoire selon les revendications 1, 2, 3 ou 4, dans lequel le crochet a la forme d'un L comportant une branche (40a) qui s'étend en montant et se termine par une extrémité fixée et une branche, de façon générale horizontale (40b) comportant ledit crochet (40c) à son extrémité libre pour s'étendre dans la cavité (14) pour venir au contact de la nervure anti-glissement (16) et caractérisé en ce que ladite branche (40a) de crochet qui s'étend en montant présente une ouverture (50) par laquelle on peut introduite une tige (52) pour pousser le crochet (40c) vers le bas pour le dégager de son contact avec la nervure (16) pour permettre de détacher l'accessoire du téléphone (10).

6. Accessoire selon l'une quelconque des revendications précédentes, caractérisé en outre par une plaque antivol (46, 60) fixée d'une côté et s'étendant vers l'avant pour venir au-dessus du crochet (40) et recouvrir la surface du téléphone située entre les berceaux (11, 12) de façon à interdire l'accès au crochet (40) de par dessus; et caractérisé de plus en ce que lesdites pièces de base (30, 32, 62, 63) présentent des portions qui s'étendent en montant depuis le crochet (40) jusqu'à la plaque antivol (46) pour interdire l'accès au crochet (40) depuis chaque côté.

7. Accessoire selon l'une quelconque des revendications précédentes dans lequel le crochet élastique (40) dévie vers le bas lorsqu'on le place dans la cavité avec ce crochet (40c) au contact du bord interne de la nervure interne (16), ce par quoi le crochet (40) exerce une force dirigée vers le haut sur la face supérieure de la cavité.

8. Accessoire selon la revendication 1, caractérisé en ce que chacune des pièces de base (62, 63) de forme générale en L, comporte un portion de pied (62b, 63b) qui s'étend dans ladite cavité (14) et dont la surface inférieure vient au contact de ladite surface du téléphone (10) au voisinage de la face inférieure de la cavité (14) et une portion montante (62a, 63b) qui s'étend le long de la face arrière de la pièce du genre chevalet (22); et caractérisé de plus par une plaque antivol (60) fixée d'un côté et s'étendant vers l'avant pour venir au-dessus du crochet (40) et recouvrir la surface du téléphone située entre les berceaux (11, 12) de façon à interdire l'accès au crochet (40) de par dessus; et par des moyens collaborants (61 et 64, 65) disposés sur la plaque antivol (60) et sur lesdites portions de pied (62b, 63b) pour fixer la plaque antivol (60) aux portions de pied, moyens collaborants qu'il n'est pas possible d'enlever lorsque l'accessoire se trouve en place sur le téléphone (10).

9. Accessoire selon la revendication 8, dans lequel le crochet a, de façon générale, la forme d'un L comportant une branche (40a) qui s'étend en montant et se termine par une extrémité fixée et une branche, de façon générale horizontale (40b) comportant ledit crochet (40c) à son extrémité libre pour s'étendre dans la cavité (14) pour venir au contact de la nervure anti-glissement (16) et caractérisé en ce que ladite branche (40a) de crochet qui s'étend en montant présente une ouverture (50) par laquelle on peut introduire une tige (52) pour pousser le crochet (40c) vers le bas pour le dégager de son contact avec la nervure (16) pour permettre de détacher l'accessoire du téléphone (10).

10. Accessoire selon la revendication 8 ou 9, caractérisé en ce que ladite pièce du genre chevalet comporte sur sa face arrière deux paires de saillies de montage (70a, 70b et 71a, 71b) parallèles l'une à l'autre et espacées l'une de l'autre, les saillies de chaque paire recevant respectivement l'une desdites portions (62a, 63a) de pièce montante de base qui se logent entre elles; et caractérisé par des moyens collaborants supplémentaires (66, 67) de la pièce du genre chevalet (22) et des portions (62a, 63a) de la pièce montante de base, moyens par lesquels ladite pièce du genre chevalet (22) est fixée aux pièces de base (62, 63).

11. Accessoire selon la revendication 10 dans lequel lesdits moyens collaborants supplémentaires (66, 67) ne peuvent pas s'enlever sans enlever les moyens collaborants (61 et 64, 65) mentionnés en premier lieu.

12. Accessoire selon la revendication 10 ou 11 caractérisé en ce que ladite pièce du genre chevalet (22) constitue une structure d'une pièce avec ledit crochet (76) et ladite plaque antivol (60).

13. Accessoire selon la revendication 10, caractérisé en ce que ladite pièce du genre chevalet (22) constitue une structure d'une pièce avec ledit crochet (76) et ladite plaque antivol (60) et en ce que lesdits moyens collaborants supplémentaires (66, 67) comportent des dispositions de broches et de fentes qui ne peuvent pas s'enlever sans enlever les moyens collaborants mentionnés en premier lieu.

## Patentansprüche

1. Aufsatz für ein Telefon (10) wie beispielsweise ein gewöhnliches Tischtelefon mit einer Hebeausnehmung (14) unter der Gabel (11, 12), um die Finger der anhebenden Hand aufnehmen zu können, mit einem rutschfesten Wulst (16) entlang der oberen Wand der Ausnehmung, wobei der Aufsatz ein staffelei-ähnliches Teil (22) zum Abstützen eines Buches oder dgl. über dem Telefon aufweist sowie ein Haken-Teil (40) aus elastischem Material, das an einem Endabschnitt befestigt ist, während der andere Endabschnitt frei und als Haken (40c) ausgeformt ist, um in die Ausnehmung zu greifen und dort mit dem inneren, rutschfesten Wulst (16) in der oberen Wandung der Hebeausnehmung (14) des Telefones in Eingriff zu kommen, dadurch gekennzeichnet, daß der Aufsatz weiterhin zwei unter Abstand parallel angeordnete Basis-Teile (30, 32: 62, 63) aufweist, die an gegenüberliegenden Seiten das Haken-Teiles (40) angeordnet sind und sich unter das Haken-Teil (40) erstrecken, um mit der Oberfläche des Telefones im Bereich der unteren Seite der Ausnehmung in Eingriff zu kommen, wodurch das Gewicht des staffelei-ähnlichen Teiles (22) im wesentlichen auf den Körper des Telefons übertragen wird und das staffelei-ähnliche Teil über dem Telefon in der gewünschten Position gehalten wird.

2. Aufsatz nach Anspruch 1, dadurch gekennzeichnet, daß die Basis-Teile (30, 32) Abschnitte (30b, 32b) aufweisen, die sich in die Hebeausnehmung (14) erstrecken.

3. Aufsatz nach Anspruch 1, dadurch gekennzeichnet, daß jedes der Basis-Teile (30, 32: 62, 63) im wesentlichen L-förmig gebildet ist und einen Fußabschnitt (30b, 32b, 62b oder 63b) aufweist, dessen untere Fläche mit der genannten Fläche des Telefons (10) im Bereich der unteren Seite der Ausnehmung (14) in Eingriff kommt, sowie einen aufrechten Abschnitt (30, 30b, 62a oder 62b), der mit dem Fußabschnitt (30a, 30b, 62a bzw. 63b) einen stumpfen Winkel bildet, so daß er nach hinten vom Telefon weggeneigt ist, wenn er darauf positioniert ist.

4. Aufsatz nach Anspruch 3, wobei sich jeder Fußabschnitt (30, 32b, 62b oder 63b) von einer Stellung außerhalb der Ausnehmung (14) derart erstreckt, daß er in der Ausnehmung (14) endet.

5. Aufsatz nach einem der Ansprüche 1, 2, 3 oder 4, wobei das Haken-Teil L-förmig ist und einen sich nach oben erstreckenden Schenkel (41a) aufweist, der in dem genannten befestigten Endabschnitt endet, sowie einen sich im wesentlichen horizontal erstreckenden Schenkel (40b), der den genannten Haken (40c) an seinem freien Ende aufwesit, um in die Ausnehmung (14) zu ragen und um dort mit dem reibfesten Wulst (16) in Eingriff zu kommen, dadurch gekennzeichnet, daß der sich aufwärts erstreckende Haken-Schenkel (40a) eine Öffnung (50) aufweist, durch welche eine Stange (52) führbar ist, um den Haken (40c) nach unten außer Eingriff mit dem Wulst zu bringen.

6. Aufsatz nach einem der vorangehenden Ansprüche, dadurch gekennzeichnet, daß eine Anti-Diebstahlsplatte (46, 60) auf einer Seite befestigt ist und sich nach vorne erstreckt, um oberhalb des Hakens (40) zum Liegen zu kommen und die Fläche des Telefones zwischen den Gabeln (11, 12) abzudecken, so daß der Zugang zum Haken (40) von oben verhindert ist; wobei der Aufsatz weiterhin dadurch charakterisiert ist, daß die Basis-Teile (30, 32: 60, 62) Abschnitte aufweisen, die sich vom Haken (40) nach oben erstrecken zur Anti-Diebstahlplatte (46), um den Zugang zum Haken (40) von jeder Seite zu verhindern.

7. Aufsatz nach einem der vorangehenden Ansprüche, wobei der elastische Haken (40) nach unten abgebogen ist, wenn er in der Ausnehmung positioniert ist und der Haken (40c) in Eingriff mit der inneren Kante des Wulstes (16) steht, wodurch der Haken (40) eine nach oben gerichtete Kraft auf die obere Seite der Ausnehmung ausübt.

8. Aufsatz nach Anspruch 1, dadurch gekennzeichnet, daß jedes der Basis-Teile (62, 63) im wesentlichen L-förmig ist mit einem Fußabschnitt (62b, 63b), welcher sich in die Ausnehmung (14) erstreckt und dessen untere Fläche mit der genannten Fläche des Telefons (10) im Bereich der unteren Seite der Ausnehmung (14) in Eingriff kommt, sowie einen Aufrechten Abschnitt (62a, 63b), der sich entlang der Rückseite des staffelei-ähnlichen Teiles (22) erstreckt; wobei weiterhin charakteristisch ist eine Anti-Diebstahlsplatte (60), welche an einer Seite befestigt ist und sich nach vorne derart erstreckt, daß sie oberhalb des Hakens (40) liegt und das Telefon zwischen den Gabeln (11, 12) überdeckt, so daß Zugang zum Haken (40) von oben verhindert ist; sowie durch Zusammenwirk-Einrichtungen (61 und 64, 65), welche auf der Anti-Diebstahlsplatte (60) und den Fußabschnitten (62b, 63b) angeordnet sind, um die Anti-Diebstahlsplatte (60) am Fußabschnitt zu befestigen, wobei die Zusammenwirk-Einrichtungen nicht zu lösen sind, wenn der Aufsatz auf dem Telefon (10) positioniert ist.

9. Aufsatz nach Anspruch 8, wobei das Haken-Teil im wesentlichen L-förmig ist und einen sich nach oben erstreckenden Schenkel (40a) aufweist, der in dem genannten, befestigten Endabschnitt endet, sowie einen sich im wesentlichen horizontal erstreckenden Schenkel (40b), der den genannten Haken (40c) an seinem freien Endabschnitt aufweist, um in die Ausnehmung (14) zu reichen und dort mit dem rutschfesten Wulst (16) in Eingriff zu kommen dadurch gekennzeichnet, daß der sich nach oben erstreckende Schenkel (40a) des Hakens eine Öffnung (50) aufwesit, durch welche eine Stange (52) führbar ist, um den genannten Haken (40c) nach unten außer Eingriff von dem Wulst (16) zu bewegen, so daß der Aufsatz vom Telefon (10) entfernbar ist.

10. Aufsatz nach einem der Ansprüche 8 oder 9, dadurch gekennzeichnet, daß das staffelei-ähnliche Teil auf seiner Rückseite zwei unter Abstand angeordnete Paar von parallel zueinander sich erstreckenden Montageflanschen (70a, 70b und 71a, 71b) aufweist, wobei die Flansche jedes Paares einen entsprechenden Endabschnitt des aufrecht stehenden Abschnittes (62a, 63a) des Basis-Abschnittes zwischen sich aufnehmen, wobei weiterhin charakteristisch ist, daß Zusammenwirkeinrichtungen (66, 67) des staffelei-ähnlich Teiles (22) und die aufrechten Basis-Teil-Abschnitte (62a, 63a) vorgehesen sind, durch welche das staffelei-ähnliche Teil (22) am Basis-Teil (62, 63) befestigbar ist.

11. Aufsatz nach Anspruch 10, wobei die weiterhin vorgesehenen Zusammenwirk-Einrichtungen (66, 67) nicht lösbar sind, ohne daß die zuerst erwähnten Zusammenwirk-Einrichtungen (61 und 64, 65) gelöst sind.

12. Aufsatz nach einem der Ansprüche 10 oder 11, dadurch gekennzeichnet, daß das staffelei-ähnliche Teil (22) einstückig mit dem Haken (76) und der Anti-Diebstahlsplatte (60) ausgeformt ist.

13. Aufsatz nach Anspruch 10, dadurch gekennzeichnet, daß das staffelei-ähnliche Teil (22) einstückig mit dem Haken (76) und der Anti-Diebstahlsplatte (60) ausgeformt ist und daß die weiterhin vorgesehenen Zusammenwirk-Einrichtungen (66, 67) Stift- und Schlitzanordnungen aufweisen, welche nicht lösbar sind, ohne daß die erstgenannten Zusammenwirk-Einrichtungen gelöst sind.

FIG. 1

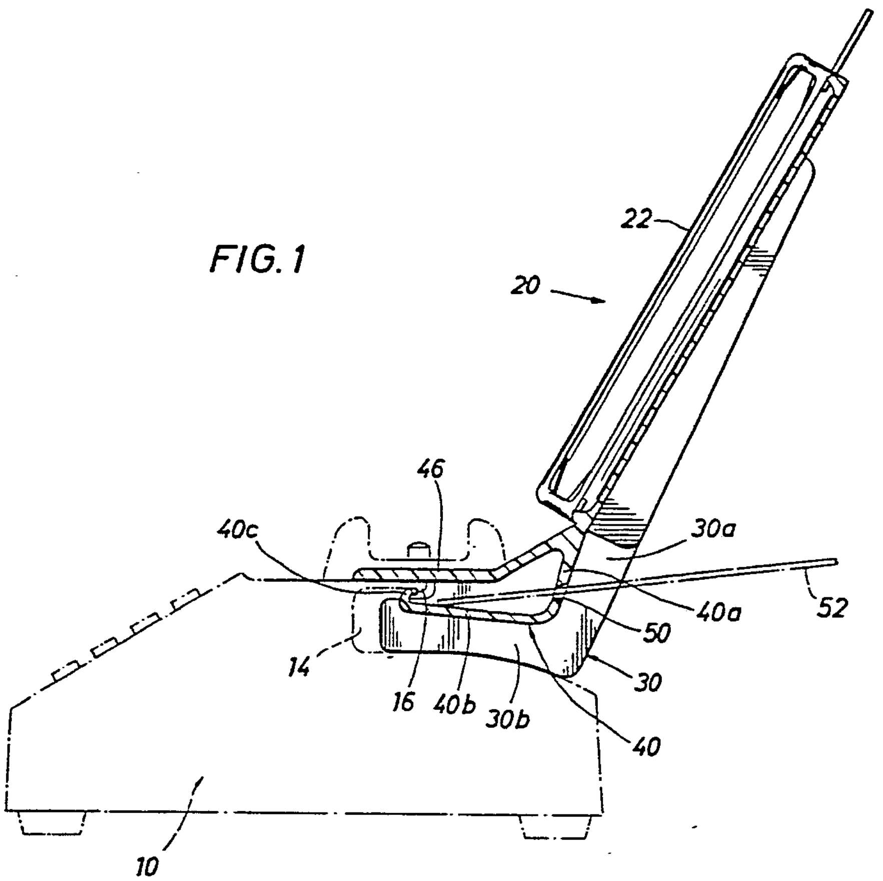
22
20
46
40c
30a
40a
52
50
14
16
40b
30b
30
40
10

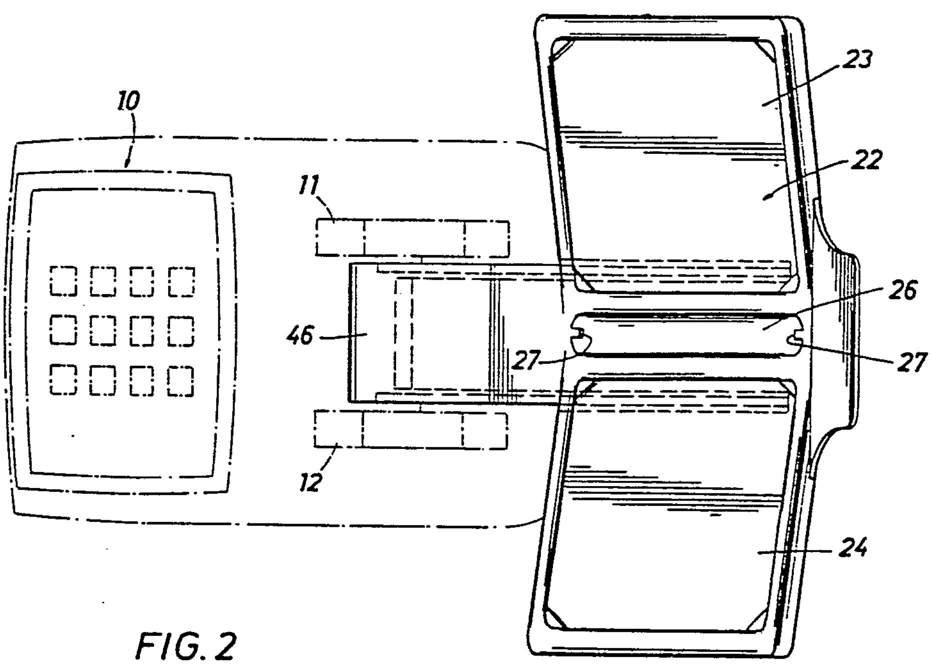
10
23
22
11
26
46
27
27
12
24

FIG. 2

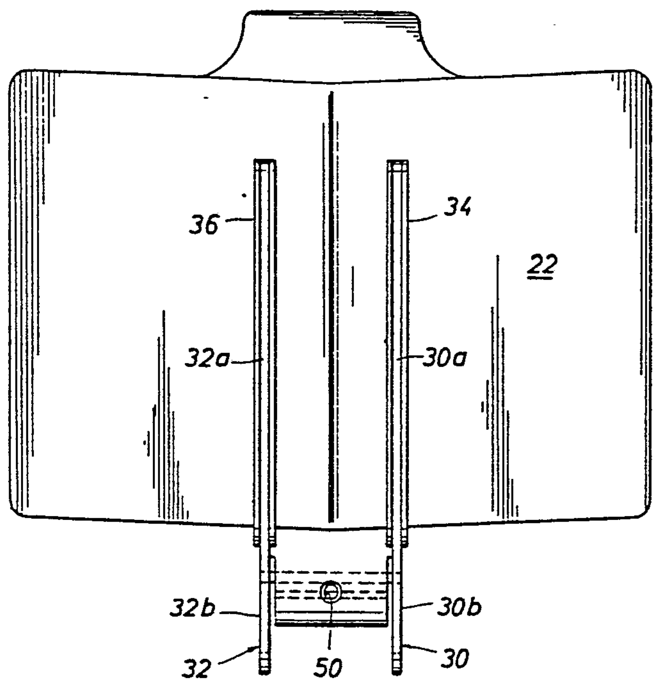


FIG. 3

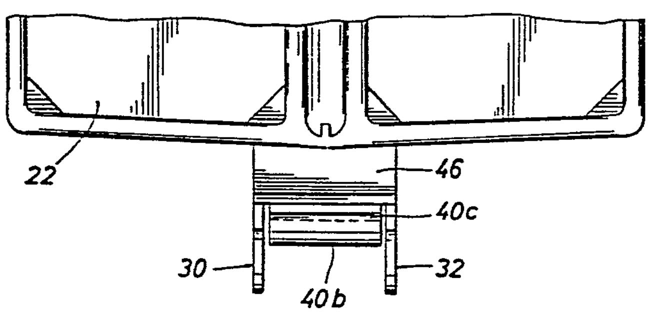


FIG. 4

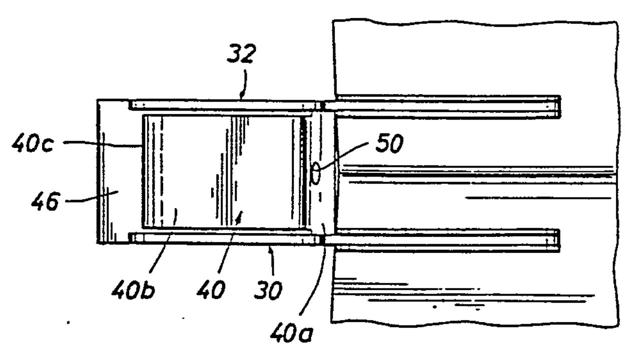


FIG. 5

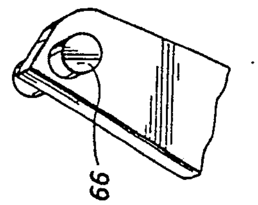


FIG. 8

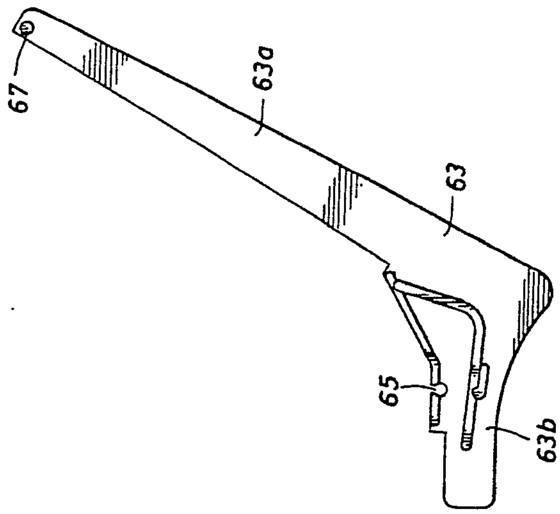


FIG. 7

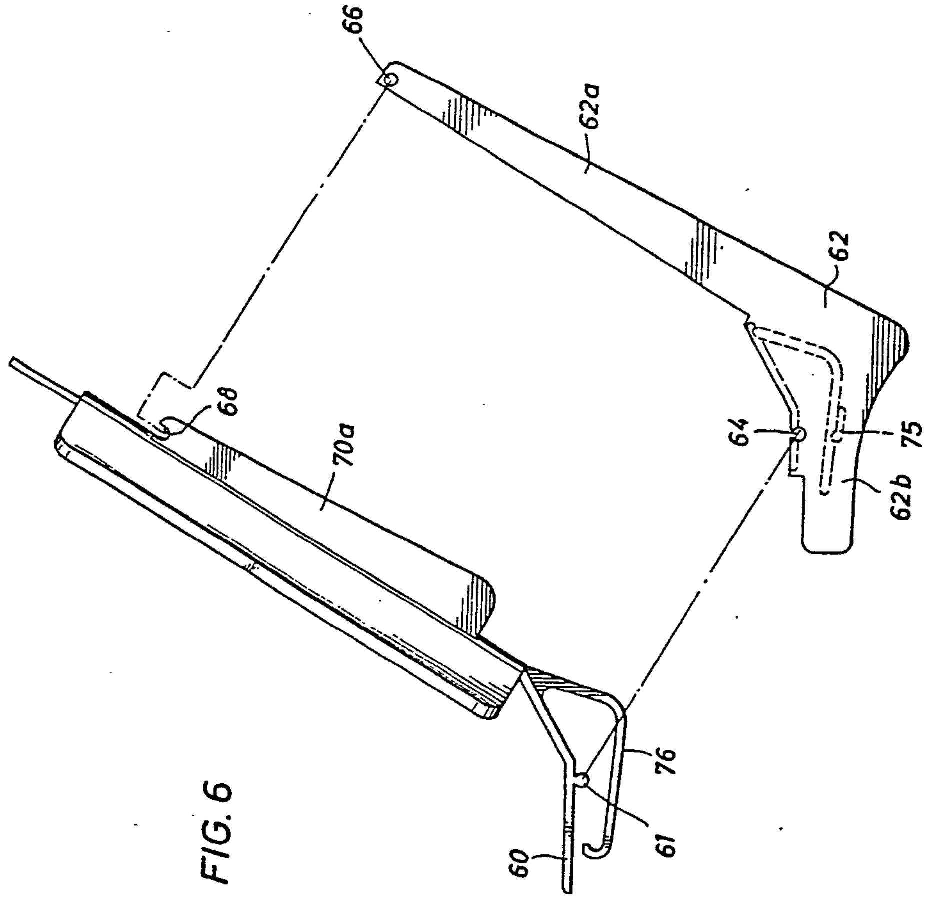


FIG. 6

FIG. 9

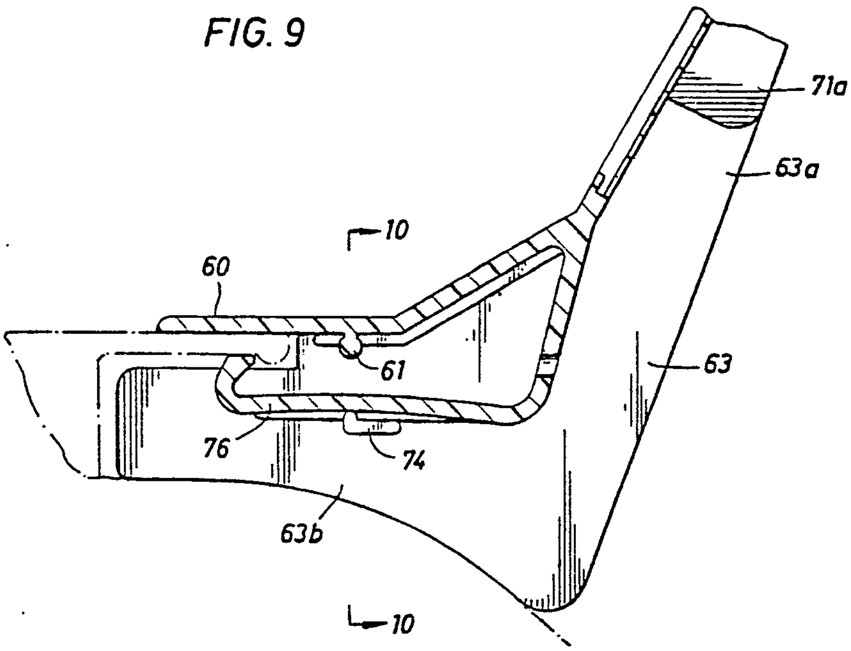


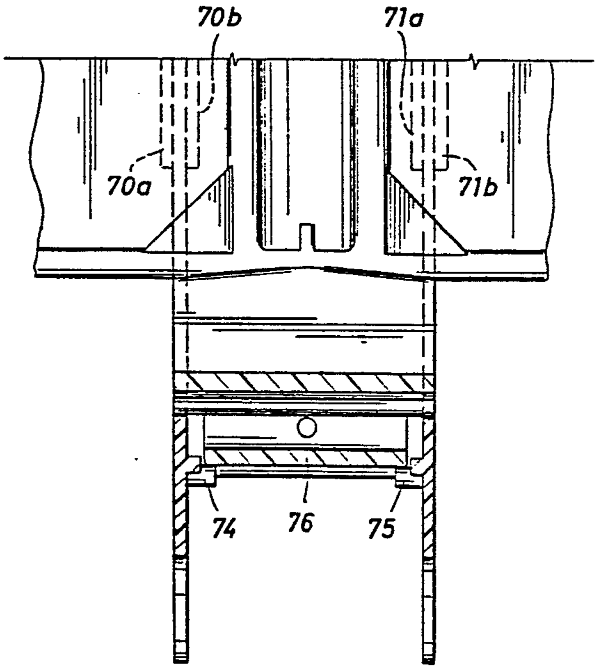


FIG. 10

FIG. 11